**Europäisches Patentamt**

**European Patent Office**

**Office européen des brevets**

(11) Veröffentlichungsnummer: **0 001 408**
**A1**

(12) **EUROPÄISCHE PATENTANMELDUNG**

(21) Anmeldenummer: **78100894.1**

(22) Anmeldetag: **14.09.78**

(51) Int. Cl.²: **B 63 B 35/32**

(30) Priorität: **04.10.77 DE 2744517**

(43) Veröffentlichungstag der Anmeldung: **18.04.79**
**Patentblatt 79/8**

(84) Benannte Vertragsstaaten: **BE FR GB NL SE**

(71) Anmelder: **C. Lühring Schiffswerft - Trockendock,
Lessingstrasse 26, D-2880 Brake/Unterweser (DE)**

(72) Erfinder: **Fries, Ortwin, Am Heigen 24, D-2880
Brake/Unterweser (DE)**
Erfinder: **Lühring, Claus, Lessingstrasse 26, D-2880
Brake/Unterweser (DE)**

(74) Vertreter: **Goddar, Heinz, Dr., FORRESTER &
BOEHMERT Widenmayerstrasse 5/IV, D-8000
München 22 (DE)**

(54) **Ölsammelschiff.**

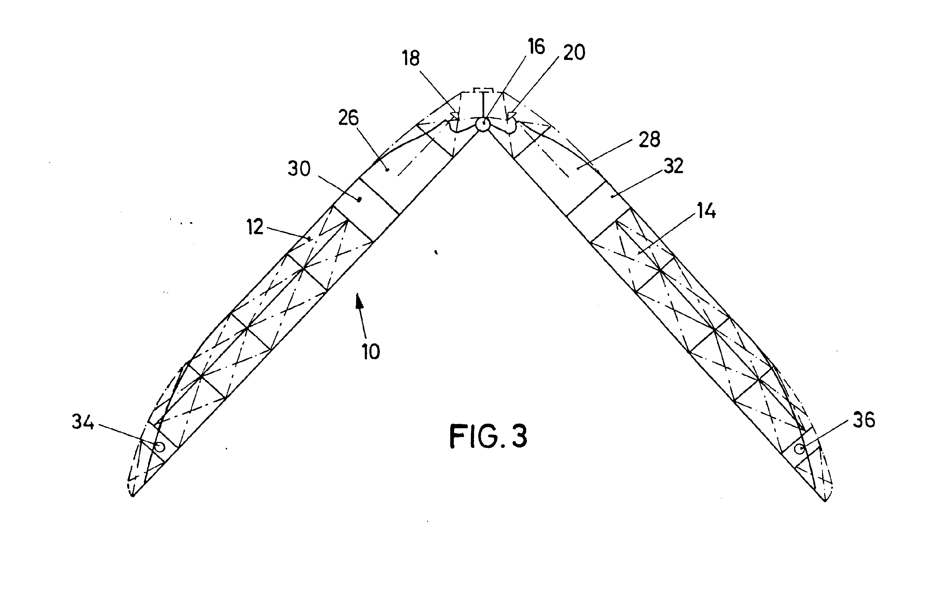

(57) Ölsammelschiff (10), mit zwei an ihren hinteren Enden angelenkten, spreizbaren Schwimmkörpern (12, 14) mit das durch die gespreizten Schwimmkörper zusammengeschobene Öl aufnehmenden Öl-Aufsaugeinrichtungen, mindestens einer die Schwimmkörper in ungespreiztem, geschlossenem Zustand parallel zur Schiffslängsachse haltenden Verriegelung und einem am Heck angeordneten Hauptantrieb (18), wobei die Schwimmkörper aus zwei Schiffsrumpfhälften (12. 14) bestehen, die am Heck durch ein Gelenk (16) unmittelbar miteinander verbunden sind; daß die die Schiffsrumpfhälften im geschlossenen Zustand zusammenhaltende Verriegelung am Backendschott vorgesehen ist; und daß am Bug jeder Schiffsrumpfhälfte (12, 14) eine Nebenantriebseinrichtung (34, 36) vorgesehen ist, wie insbesondere in Fig. 3 gezeigt.

C. Lühring - Schiffswerft - Trockendock,
2880 Brake/Unterweser

------------------------------------------------

Ölsammelschiff

------------------------------------------------

Die Erfindung betrifft ein Ölsammelschiff, mit
zwei an ihren hinteren Enden angelenkten, spreizbaren Schwimmkörpern mit das durch die gespreizten
Schwimmkörper zusammengeschobene Öl aufnehmenden Öl-
Aufsaugeinrichtungen, mindestens einer die Schwimmkörper in ungespreiztem, geschlossenen Zustand
parallel zur Schiffslängsachse haltenden Verriegelung und einem am Heck angeordneten Hauptantrieb.

Bei Ölunfällen, insbesondere beim Ausbruch von Öl
im Offshore-Bereich, drohen nicht nur den offenen
Meeren, sondern auch den Küsten umfangreiche Verschmutzungen, deren Beseitigung einen beträchtlichen
Kostenaufwand erfordert.

Zur Zeit werden zur Ölbekämpfung Ölfangschiffe in

413

- 2 -

Form von Katamaranen eingesetzt, die allerdings nur
eine sehr begrenzte Effektivität und Breite besitzen.
Im übrigen können derartige Schiffe zu keinem anderen
Verwendungszweck eingesetzt werden und sind außerhalb
der Einsatzzeiten bei Ölunfällen im Offshore-Bereich
totes Kapital.

Weiterhin werden zur Ölbekämpfung sog. Skimmer eingesetzt, die das Öl mittels sich drehender Trommeln abschöpfen. Derartige Skimmer arbeiten innerhalb von Ölsperren, die durch aneinandergereihte Schwimmkörper
gebildet wurden. Diese Ölsperren besitzen angeblich
zahlreiche Nachteile. Zum einen haben sie keinen sehr
großen Tiefgang, so daß das Öl bei höherem Wellengang
unter ihnen hindurchtreten kann; ebenso ragen sie nicht
sehr weit über die Wasseroberfläche hinaus, so daß die
Gefahr besteht, daß Öl über sie hinweggeschwemmt wird.
Außerdem müssen diese Ölsperren von zusätzlichen
Schleppern gezogen werden.

Der Erfindung liegt die Aufgabe zugrunde, ein Ölsammelschiff der eingangs genannten Art zu schaffen, das
effektiv als Ölfang- bzw. Ölabschöpfschiff zur Bekämpfung von Ölverschmutzungen bei Ölunfällen im
Offshore-Bereich, insbesondere bei ungünstigen Wetterlagen mit langen Ölfahnen, eingesetzt werden kann, daneben aber außerhalb dieses Spezialeinsatzes als übliches Tankschiff verwendbar ist, wobei das Ölsammelschiff insbesondere auch bei verhältnismäßig starkem
Seegang einsetzbar sein soll.

- 3 -

Erfindungsgemäß wird diese Aufgabe dadurch gelöst, daß die Schwimmkörper aus zwei Schiffsrumpfhälften bestehen, die am Heck durch ein Gelenk unmittelbar miteinander verbunden sind; daß die die Schiffsrumpfhälften im geschlossenen Zustand zusammenhaltende Verriegelung am Backendschott vorgesehen ist; und daß am Bug jeder Schiffsrumpfhälfte eine Nebenantriebseinrichtung vorgesehen ist.

Eine bevorzugte Ausführungsform zeichnet sich dadurch aus, daß jede Schiffsrumpfhälfte in sich stabil ist. Derart bleiben beide Schiffsrumpfhälften selbst bei einem Auseinanderbrechen des Gelenks auf der Wasseroberfläche, kippen nicht um und sind bewegungsfähig. Eine andere Ausführungsform hat das vorteilhafte Merkmal, daß die wesentlichen Aufbauten sich auf einer Schiffsrumpfhälfte befinden. Gemäß einer weiteren Ausführungsform ist vorgesehen, daß in jeder Schiffsrumpfhälfte ein Hauptantrieb, Lüftungsanlagen mit Abgaspfosten sowie Pumpen- und Maschinenräume vorhanden sind.

Eine äußerst bevorzugte Ausgestaltung der Erfindung sieht vor, daß jeweils in der der anderen Schiffsrumpfhälfte zugewandten Bordwand jeder Schiffsrumpfhälfte Aufsaugöffnungen angeordnet sind, wobei insbesondere vorgesehen ist, daß die Aufsaugöffnungen als mittels hydraulisch betätigter Kulissenschieber verschiebbare Längsschlitze ausgebildet sind.

- 4 -

Das Schließen der beiden Schiffsrumpfhälften nach
getätigtem Einsatz wird insbesondere dadurch erleichtert, daß die Verriegelungen jeweils eine sich
verjüngende Führung in einer Schiffsrumpfhälfte und
einen mit dieser zusammenwirkenden sich verjüngenden
Dorn in der anderen Schiffsrumpfhälfte aufweist bzw.
aufweisen. Eine besonders bevorzugte Ausführungsform
der Erfindung sieht weiterhin vor, daß die Nebenantriebe als Manöverpropeller um 360° schwenkbar sind.

Weitere Vorteile und Merkmale der Erfindung ergeben
sich aus den Ansprüchen und aus der nachfolgenden Beschreibung, in der ein Ausführungsbeispiel anhand
der Zeichnung im einzelnen erläutert ist. Dabei zeigt:

> Fig. 1   das erfindungsgemäße Ölsammelschiff
> in Seitenansicht;
>
> Fig. 2   eine Draufsicht des erfindungsgemäßen
> Ölsammelschiffs in geschlossenem Zu-
> stand; und
>
> Fig. 3   einen Horizontalschnitt des erfin-
> dungsgemäßen Ölsammelschiffs in ge-
> öffnetem Zustand in verkleinertem
> Maßstab.

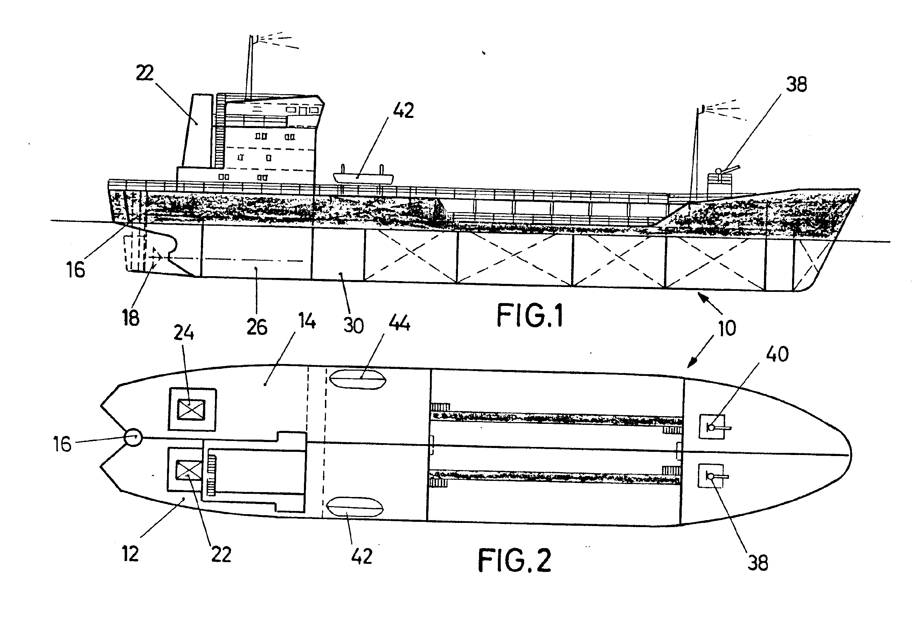

Das Ausführungsbeispiel des erfindungsgemäßen Mehrzweckschiffes 10 stellt sich nach der Fig. 1 als
Küstentanker dar, der, wie aus Fig. 2 zu erkennen ist,
im Verhältnis zu seiner Länge sehr breit ist. Das Mehrzweckschiff 10 besteht dabei aus zwei nebeneinander angeordneten Schiffsrumpfhälften 12, 14, die beide in
sich stabil und seegängig sind. Die beiden Schiffs-

- 5 -

rumpfhälften 12, 14 sind am Heck mittels eines Gelenks, das im vorliegenden Falle als Scharnier 16
ausgebildet ist, verbunden. Im geschlossenen Zustand sind die Schiffsrumpfhälften 12, 14 durch
hydraulisch zu betätigende Verriegelungen (nicht
gezeigt) am Poopfrontschott und Backendschott zusammengehalten. Die Verriegelungen sind dabei vorzugsweise zu ergänzen durch pyramidenförmige Dorne
und Führungen in den einander zugewandten Flächen
der beiden Rumpfhälften, so daß die Schiffsrumpfhälften 12, 14 beim Schließen exakt gegeneinander
geführt werden.

Das Spiegelheck jeder Schiffsrumpfhälfte ist an der
Innenseite vom Scharnier 16 aus derart ausgebildet,
daß sich die Schiffsrumpfhälften 12, 14 um das
Scharnier 16 auf einen Winkel von etwa 90$^{\circ}$ öffnen
lassen, bei dem dann die Innenseiten der Spiegelhecks
der beiden Schiffsrumpfhälften 12, 14 zusammenstoßen
und mittels einer Verriegelung (nicht gezeigt) im
geöffneten Zustand des Mehrzweckschiffes 10 verriegelt werden können, so daß durch diese Verriegelung
ein Teil der auf das Scharnier 16 wirkenden Kräfte
aufgenommen werden kann.

Jede Schiffsrumpfhälfte 12, 14 besitzt ihren eigenen
Hauptantrieb 18, 20, wozu jeweils Lüftungsanlagen,
Abgaspfosten 22, 24 sowie Maschinen- 26, 28 und Pumpenräume 30, 32 vorhanden sind. Im Bug 33 besitzt
das erfindungsgemäße Mehrzweckschiff 10 ebenfalls in jeder Schiffsrumpfhälfte 12, 14 jeweils einen
Nebenantrieb 34, 36 mit einem ausfahrbaren Manöverpropeller zum Antreiben und Positionieren
des Mehrzweckschiffes, der hierzu um 360° verschwenkbar ist. Auf dem Vorderteil des Schiffes
befinden sich weiterhin auf jeder Schiffsrumpfhälfte 12, 14 Schaumkanonen 38, 40 um gegebenenfalls eine Feuersperre legen zu können. Etwa
mittschiffs, unterhalb der Rettungsboote 42, 44,
befindet sich in jeder Schiffsrumpfhälfte 12, 14
ein Entöler 46, 48 bzw. ein Slopetank.

Während die wesentlichen funktionellen Elemente des
Mehrzweckschiffes 10 in jeder Schiffsrumpfhälfte
12, 14, also doppelt, vorhanden sind, wie z. B.
Doppelschraubenantrieb etc., befinden sich die Aufbauten 50, insbesondere die Aufbaudecks, lediglich
auf einer Schiffsrumpfhälfte, nämlich im dargestellten
Ausführungsbeispiel auf der rechten Schiffsrumpfhälfte
12. Die notwendigen Steuerleitungen etc. sind dabei
durch das Scharnier 16 geführt, welches einen erheblichen Durchmesser besitzt, so daß ebenfalls ein begehbarer Durchgang durch das Scharnier 16 führen kann,
der durch Türen verschließbar ist.

Normalerweise wird das erfindungsgemäße Mehrzweckschiff als Küstentanker eingesetzt. Die Manöverpropelleranlagen können dabei als Bugruderanlage dienen.
Im Falle eines Ölfangeinsatzes fährt das Mehrzweckschiff 10 in geschlossenem Zustand unmittelbar bis
an die Ölaustrittsstelle heran. Dort werden die Verriegelungen am Poopfrontschott und Backendschott
gelöst und die Schiffsrumpfhälften 12, 14 mittels
der in den Vorschiffen als Manöverpropeller eingebauten Nebenantriebe 34, 36 auseinandergefahren.
Nach Erreichen des Öffnungswinkels von ca. 90$^{\circ}$,
bei dem die inneren Seiten des Spiegelhecks aneinanderliegen, wird dort das Verriegelungsschloß am
Spiegelheck geschlossen, so daß ein Teil der auf
das Scharnier 16 wirkenden Kräfte durch die Verriegelung am Spiegelheck aufgenommen wird. Die Manöverpropeller werden nun derart umgeschwenkt, daß sie
zum langsamen Vortrieb ins Ölfeld bzw. zum Positionieren des Mehrzweckschiffes 10 in geöffnetem Zustand
dienen.

Im geöffneten Zustand hat das dargestellte Mehrzweckschiff eine Auffangbreite von ca. 100 m, die ausreicht, durch den Wind ausgetriebene Ölfahnen aufzunehmen, die zwar sehr lang sind, aber erfahrungsgemäß nur eine begrenzte Breite besitzen. Zwischen den
von den Schiffsrumpfhälften 12, 14 gebildeten Schwenkeln des offenen Dreiecks kann dann das Öl mit einem
oder mehreren marktüblichen Geräten, beispielsweise
Skimmern, abgeschöpft und den aus den beiden Schiffshälften eingebauten Entölern 46, 48 zugeführt werden.
Vorzugsweise kann aber auch vorgesehen sein, daß jeweils in der inneren Bordwand jeder Schiffsrumpfhälfte
12, 14 Aufsaugöffnungen angeordnet sind. Diese Aufsaugöffnungen sind insbesondere als verschiebbare Längsschlitze ausgebildet, die durch hydraulisch betätigbare

- 8 -

Kulissenschieber in Abhängigkeit vom Tiefgang des
Mehrzweckschiffes 10 vertikal verschiebbar sind.
Derart kann das Öl direkt durch die Schlitze abgesogen werden.

Die Entöler 46, 48 sind in einem weiten Größenbereich dimensionierbar. In den Entölern wird das mit
aufgesaugte Wasser vom Öl getrennt und wieder nach
außen abgegeben, während das abgeschöpfte Öl im ausreichend großen Ladetankraum gebunkert wird und gegebenenfalls mittels Übergabeeinrichtungen auf andere Schiffe übergeben werden kann. Insbesondere
kann das Mehrzweckschiff 10 auch sehr dicht an eine
Ölquelle heranfahren und dort gegebenenfalls mit anderen gleichartigen Mehrzweckschiffen verkoppelt
werden, so daß die gesamte Ölquelle dicht absperrbar
ist. Weiterhin kann das Mehrzweckschiff 10 in äußerst
variabler Weise gleichzeitig auch als Feuerlöschschiff eingesetzt werden.

Die in der vorstehenden Beschreibung, in der Zeichnung sowie in den Ansprüchen offenbarten Merkmale der
Erfindung können sowohl einzeln als auch in beliebigen
Kombinationen für die Verwirklichung der Erfindung in
ihren verschiedenen Ausführungsformen wesentlich sein.

**A n s p r ü c h e**
=================

1. Ölsammelschiff, mit zwei an ihren hinteren Enden
angelenkten, spreizbaren Schwimmkörpern mit das durch
die gespreizten Schwimmkörper zusammengeschobene Öl
aufnehmenden Öl-Aufsaugeinrichtungen, mindestens einer
die Schwimmkörper in ungespreiztem, geschlossenen Zustand parallel zur Schiffslängsachse haltenden Verriegelung und einem am Heck angeordneten Hauptantrieb, dadurch gekennzeichnet, daß die Schwimmkörper aus zwei
Schiffsrumpfhälften (12, 14) bestehen, die am Heck durch
ein Gelenk (16) unmittelbar miteinander verbunden sind;
daß die die Schiffsrumpfhälften im geschlossenen Zustand
zusammenhaltende Verriegelung am Backendschott vorgesehen ist; und daß am Bug (33) jeder Schiffsrumpfhälfte (12, 14) eine Nebenantriebseinrichtung (34, 36) vorgesehen ist.

2. Ölsammelschiff nach Anspruch 1, dadurch gekennzeichnet, daß jede Schiffsrumpfhälfte (12, 14) in sich
stabil ist.

3. Ölsammelschiff nach Anspruch 1 oder 2, dadurch gekennzeichnet, daß die wesentlichen Aufbauten (50) sich
auf einer Schiffsrumpfhälfte (12) befinden.

4. Ölsammelschiff nach einem der vorangehenden Ansprüche,
dadurch gekennzeichnet, daß in jeder Schiffsrumpfhälfte
ein Hauptantrieb (18,20), Lüftungsanlagen mit Abgaspfosten
(23, 24) sowie Pumpen- (30, 32) und Maschinenräume (34, 36)
vorgesehen sind.

5. Ölsammelschiff nach einem der vorangehenden Ansprüche,
dadurch gekennzeichnet, daß in jeder Schiffsrumpfhälfte
(12, 14) mindestens ein Entöler (46, 48),Slopetank o. dgl.
vorgesehen ist.

6. Ölsammelschiff nach einem der vorangehenden Ansprüche,
dadurch gekennzeichnet, daß in der der jeweils anderen
Schiffsrumpfhälfte zugewandten Bordwand jeder Schiffsrumpfhälfte (12, 14) als Aufsaugöffnungen durch Kulissenschieber verschiebbare Längsschlitze vorgesehen sind.

7. Ölsammelschiff nach einem der vorangehenden Ansprüche,
dadurch gekennzeichnet, daß das Gelenk ein Scharnier (16)
ist.

8. Ölsammelschiff nach einem der Ansprüche 1 bis 6, dadurch gekennzeichnet, daß das Gelenk (16) ein Kugelgelenk
ist.

0001408

9. Ölsammelschiff nach einem der vorangehenden Ansprüche, dadurch gekennzeichnet, daß am Spiegelheck ein Verriegelungsschloß vorgesehen ist.

10. Ölsammelschiff nach einem der vorangehenden Ansprüche, dadurch gekennzeichnet, daß die Schiffsrumpfhälften (12, 14) bis zu einem Winkel von etwa 90$^{\circ}$ auseinanderfahrbar und unter diesem Winkel verriegelbar sind.

11. Ölsammelschiff nach einem der vorangehenden Ansprüche, dadurch gekennzeichnet, daß neben mindestens einer Verriegelung am Poopfrontschott mindestens eine weitere Verriegelung am Backendschott vorgesehen ist.

12. Ölsammelschiff nach einem der vorangehenden Ansprüche, dadurch gekennzeichnet, daß die Verriegelungen hydraulisch betätigbar sind.

13. Ölsammelschiff nach einem der vorangehenden Ansprüche, dadurch gekennzeichnet, daß die einander zugewandten Seitenflächen der Schiffsrumpfhälften mindestens eine sich verjüngende Führung in einer Schiffsrumpfhälfte (12) und einen entsprechend sich verjüngenden Dorn in der anderen Schiffsrumpfhälfte (14) aufweisen.

14. Ölsammelschiff nach Ansprüch 13, dadurch gekennzeichnet, daß Führungen und Dorne pyramidenförmig ausgebildet sind.

15. Ölsammelschiff nach Anspruch 13, dadurch gekennzeichnet, daß Führungen und Dorne kegelförmig ausgebildet sind.

16. Ölsammelschiff nach einem der vorangehenden Ansprüche, dadurch gekennzeichnet, daß die Nebenantriebseinrichtungen

- 4 -

0001408

(34, 36) als Manöverpropelleranlagen ausgebildet sind.

17. Ölsammelschiff nach Anspruch 16, dadurch gekennzeichnet, daß die Manöverpropeller um 360$^O$ verschwenkbar sind.

FIG.1

FIG.2

FIG. 3

**Europäisches Patentamt**

**EUROPÄISCHER RECHERCHENBERICHT**

0001408

Nummer der Anmeldung

EP 78 10 0894

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | B 63 B 35/32 |
| | <u>DE - A - 2 059 404</u> (PRAN)<br>* Seite 3, Zeile 20 - Seite 5, Zeile 7; Abbildungen 1,2 *<br><br>-- | 1-4,7-12 | |
| | <u>US - A - 3 348 690</u> (CORNELISSEN)<br>* Spalte 4, Zeile 19 bis Spalte 5, Zeile 59; Abbildungen 1,3 *<br><br>-- | 1-5,7,8 | |
| | <u>FR - A - 1 556 330</u> (TECHNOCEAN)<br>* Seite 2, linke Spalte, Zeile 37 bis rechte Spalte, Zeile 23; Abbildung 1 *<br><br>-- | 1,16,17 | **RECHERCHIERTE SACHGEBIETE (Int. Cl.³)**<br><br>B 63 B<br>E 02 B |
| A | <u>FR - A - 2 153 566</u> (ROUGET)<br>* Seite 30 bis Seite 2, Zeile 7; Abbildungen 1,2,13-22 *<br><br>-- | 1 | |
| A | <u>GB - A - 507 907</u> (ONORI)<br>* Ansprüche 1 bis 9; Abbildungen 2,3 *<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-01-1979 | DE SCHEPPER |

EPA form 1503.1  06.78